# EUROPEAN PATENT APPLICATION

(11) **EP 1 517 317 A1**
(43) Date of publication of application: **23.03.2005**
(21) Application number: 03021277.3
(22) Date of filing: 19.09.2003
(51) Int. Cl.: G11B 7/24, C09B 69/04

(54) **New triarylmethane / mono-azo complex dye compounds for optical data recording**

(71) Applicant: CLARIANT INTERNATIONAL LTD., 4132 Muttenz (CH)
(72) Inventor: Pflieger, Dominique, 68130 Tagsdorf (FR); Steffanut, Pascal, 68680 Kemps-Loechlé (FR)

(57) **Abstract**

The present invention relates to new triarylmethane / mono-azo complex dye compounds and their use as dyes in optical layers for optical data recording, preferably for optical data recording using a laser with a wavelength from 630 to 670 nm.

The invention further relates to an optical layer comprising said dyes and to a write only read many (WORM) type optical recording medium capable of recording and reproducing information with radiation of red laser, which employs an triarylmethane /mono-azo complex type dye in the optical layer.

In particular, the present invention relates to crystal violet / mono-azo complex dye compounds and their use as dyes in optical layers for optical data recording

## Description

The present invention relates to new triarylmethane / mono-azo complex dye compounds and their use as dyes in optical layers for optical data recording, preferably for optical data recording using a laser with a wavelength from 630 to 670 nm.
The invention further relates to an optical layer comprising said dyes and to a write only read many (WORM) type optical recording medium capable of recording and reproducing information with radiation of a red laser, which employs an triarylmethane / mono-azo complex type dye in the optical layer.

Recently, organic dyes have attracted considerable attention in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stability, durability for storage and non-toxicity.

For industrial application, organic dyes in the field of diode-laser optical storage have to be suitable for the spin coating process to prepare thin films, i.e. they have to be sufficiently soluble in the organic solvents generally applied in the spin coating process.

Write only read many (WORM) type and erasable type optical recording media reproduce information by detecting variations in the reflectivity caused by physical deformation, by alterations of optical characteristics as well as by phase properties and magnetic properties of a recording layer before and after the recording.

Recordable compact discs with a storage capabilities up to 680 MBytes (CD-R) are an example of a WORM type optical recording medium. Recently, digital versatile discs (DVD) with increased information storage capabilities up to 4.7 GBytes and the respective DVD-R have been commercialized.

The DVD-R technology currently adopts as a light source a red diode laser with a wavelength of 630-670 nm. Thereby the pit size and track interval can be reduced, increasing the information storage capacity by up to 6-8 times compared to CD-R's.

Blu-ray® discs (Blu-ray® disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disc. By adopting a blue diode laser with a wavelength of 405 nm (e.g. by use of GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually discs or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. silver, gold or copper, is deposited upon the optical layer.

Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating, or soaking. The preferred process in industry is spin coating to form an optical layer of about 70 nm to 250 nm thickness. For the application in the spin coating process, the material of the optical layer has to be highly soluble in organic solvents.

Triarylmethane derivatives are known in the art as suitable counterions or quenchers for electronic and optical materials. In particular the tris(4-(N,N-dimethylamino)-phenyl)methane (commercially available as crystal violet) is known as counterion in various combinations (JP10181206 (Ricoh, **1998**), JP61032793 (Ricoh, **1986**), JP61019395 (Ricoh, **1986**))

Surprisingly it has now been found that compounds comprising cationic triarylmethane derivatives and anionic mono-azo metal complexes provide for high lightfastness and are useful as dye compounds in optical layers for optical data recording media, in particular for DVD-R optical data recording media.

The present invention therefore in general terms relates to dye compounds comprising cationic triarylmethane derivatives and anionic mono-azo metal complexes, to an optical layer comprising said dye compounds and to a write only read many (WORM) type optical data recording medium capable of recording and reproducing information with radiation of a laser, preferably of a red laser at a wavelength from 630 to 670 nm, most preferably at around 650 nm, which employs a dye compound comprising cationic triarylmethane derivatives and anionic mono-azo metal complexes in the optical layer.

More particularly, the invention relates to optical layers comprising cationic crystal violet and anionic mono-azo metal complexes as dye compound and to the use of said dye compound as optical layers for optical recording media.

The present invention relates to a dye compound comprising cationic triarylmethane derivatives and anionic 2:1 and 1:1 mono-azo metal complexes of the formulae (I) or (II) 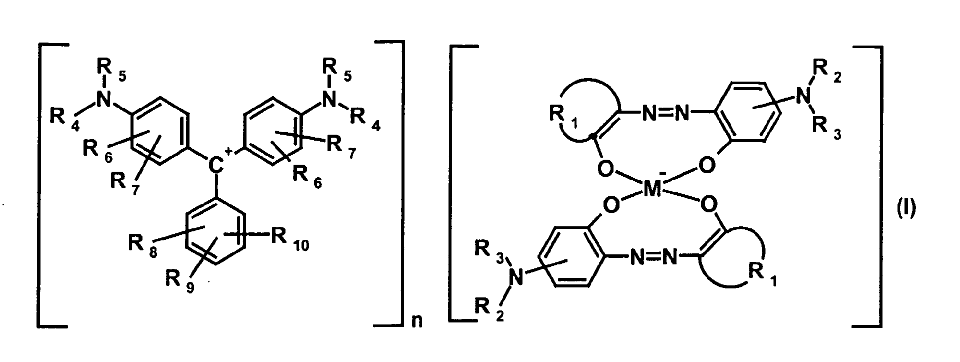 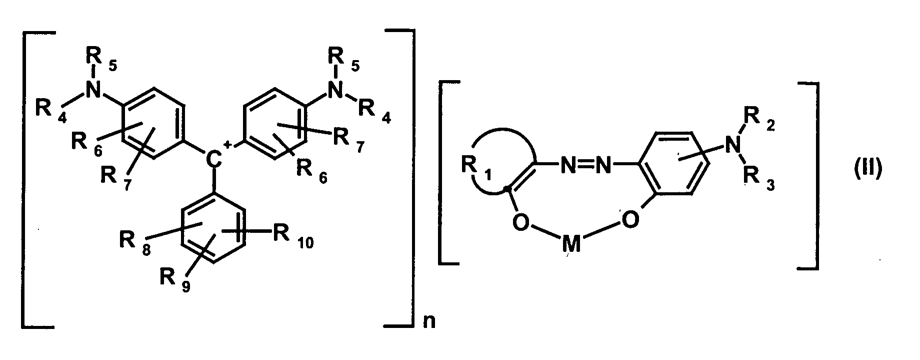 wherein
- n: is 1 to 4 and corresponds to the total number of anionic groups (M⁻, CO₂⁻ and SO₃⁻) located on the mono-azo metal complexe moiety of the molecule;
- M: represents a metal atom,
- each R₁: independently, together with the -C=C- group to which they are attached, form a single or fused aromatic ring system that is substituted with at least one or more sulfonate (SO₃⁻) or carboxylate (CO₂⁻) groups;
- R₂ and R₃: independently of each other, represent hydrogen, alkyl, alkoxyalkyl, cycloalkyl, dialkylamino-alkyl, aryl, heteroaryl or R₂, R₃ together with the N atom to which they are bonded, form a heterocyclic 5, 6 or 7-membered ring, optionally with participation of further hetero atoms selected from the group consisting of O, N, S;
- R₄ and R₅: independently of each other, represent hydrogen, alkyl, alkoxyalkyl, cycloalkyl, aryl, dialkylamino-alkyl, aryl, arylsulfonyl, alkylarylosulfonyl, heteroaryl, alkoxy, alkylthio, aryloxy, arylthio.
- R₆, R₇, R₈, R₉, R₁₀: independently of each other, represent hydrogen, hydroxy, halogen (F, Cl, Br, I), cyano, nitro, alkyl, aryl, amino, alkylamino, dialkylamino, arylamino, diarylamino, dialkylamino-alkyl, heteroaryl, alkoxy, alkylthio, aryloxy, arylthio, SO₃H, SO₂NR₁₁R₁₂, CO₂R₁₂, CONR₁₁R₁₂, NHCOR₁₂, wherein
R₁₁ is hydrogen, C₁₋₆alkyl, C₆₋₁₀aryl, C₁₋₆alkoxy and
R₁₂ is hydrogen, C₁₋₆alkyl, C₆₋₁₀aryl, C₁₋₆alkoxy.

In a preferred embodiment, the invention relates to a dye compound of the formulae (I) or (II), wherein
- n: is 1, 2, 3 or 4 and corresponds to the total number of anionic groups (M⁻, CO₂⁻ and SO₃⁻) located on the mono-azo metal complexe moiety of the molecule;
- M: is selected from the group consisting of Mg, Mn, Co, Cr, Fe, Ni, Cu, Zn, Al;
- each R₁: independently, together with the -C=C- group to which they are attached, form a benzene or naphtalene aromatic ring that is substituted with at least one or more sulfonate (SO₃⁻) or carboxylate (CO₂⁻) groups;
- R₂ and R₃: independently of each other, represent hydrogen, C₁₋₄alkyl, C₁₋₄alkoxyalkyl, C₅₋₆cycloalkyl, C₆₋₁₀aryl, or
R₂ and R₃ together with the N atom to which they are bonded, form a heterocyclic ring selected from the group consisting of pyrolidino, piperidino or morpholino;
- R₄ and R₅: independently of each other, represent hydrogen, C₁₋₄alkyl, C₁₋₄alkoxyalkyl, C₅₋₆cycloalkyl or C₆₋₁₀aryl;
- R₆, R₇, R₈, R₉: independently of each other, represent hydrogen, hydroxy, halogen (F, Cl, Br, I), cyano (CN), nitro (NO₂), C₁₋₄alkyl, C₁₋₄alkoxyalkyl, C₅₋₆cycloalkyl or C₆₋₁₀aryl; amino, C₁₋₄alkyl amino, C₁₋₄ dialkylamino, C₆₋₁₀aryl amino, C₆₋₁₀diarylamino, C₁₋₄alkoxy, C₁₋₄alkylthio, C₆₋₁₀aryloxy, C₆₋₁₀arylthio, SO₃H, SO₂NR₁₁R₁₂, CO₂R₁₂, CONR₁₁R₁₂, NHCOR₁₂, wherein
R₁₁ is hydrogen, C₁₋₄alkyl and
R₁₂ is hydrogen, C₁₋₆alkyl;
- R₁₀: is C₁₋₄ dialkylamino;

In a more preferred embodiment, the invention relates to a dye compound of the formulae (I) or (II), wherein
- n: is 1 or 2 and corresponds to the total number of anionic groups (M⁻, CO₂⁻ and SO₃⁻) located on the mono-azo metal complexe moiety of the molecule;
- M: is selected from the group consisting of Fe, Ni, Cu, Al;
- each R₁: independently, together with the -C=C- group to which they are attached, form a benzene or naphtalene aromatic ring that is substituted with one sulfonate (SO₃⁻);
- R₂ and R₃: independently of each other, represent hydrogen, C₁₋₄alkyl, or R₂ and R₃ together with the N atom to which they are bonded, form a heterocyclic ring selected from the group consisting of pyrolidino, piperidino or morpholino;
and the amino group bearing R₂ and R₃ is in the 4- or 5- position of the phenyl ring.
- R₄ and R₅: independently of each other, represent hydrogen or C₁₋₄alkyl;
- R₆, R₇, R₈, R₉: represent hydrogen;
- R₁₀: is C₁₋₄ dialkylamino in the 4-position of the phenyl ring;

In a most preferred embodiment, the invention relates to a dye compound of the formulae (I) or (II), wherein
- n: is 1 or 2 and corresponds to the total number of anionic groups (M⁻, CO₂⁻ and SO₃⁻) located on the mono-azo metal complexe moiety of the molecule;
- M: is selected from the group consisting of Ni or Cu;
- each R₁: independently, together with the -C=C- group to which they are attached, form a naphtalene aromatic ring that is substituted with one sulfonate (SO₃⁻);
- R₂ and R₃: independently of each other, represent C₁₋₄alkyl, and the amino group bearing R₂ and R₃ is in the 4- position of the phenyl ring;
- R₄ and R₅: independently of each other, represent C₁₋₄alkyl;
- R₆, R₇, R₈, R₉: represent hydrogen;
- R₁₀: is dimethylamino in the 4-position of the phenyl ring;

The most preferred triarylmethane derivative used in the dye compounds according to the invention is the cation of tris(4-(N,N-dimethylamino)-phenyl)methane, which is commercially available as crystal violet:

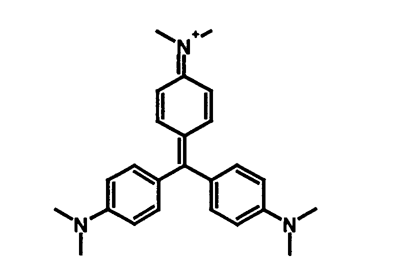

The present invention further relates to an optical layer comprising at least one dye compound of formula (I) or (II).

An optical layer according to the invention may also comprise a mixture of two or more, preferably of two dye compounds of formulae (I) or (II) as defined above. Most preferred mixtures are mixtures of one formula (I) type dye with one formula (II) type dye.

Further, the invention relates to a method for producing optical layers comprising the following steps
(a) providing a substrate
(b) dissolving a dye compound (or a mixture of dye compounds) of formula (I) or (II) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

Organic solvents are selected from C₁₋₈ alcohol or halogen substituted C₁₋₈ alcohols, C₁₋₈ ketone, C₁₋₈ ether, halogen substituted C₁₋₄ alkane, or amides.

Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.

Preferred amides are for example dimethylformamide or dimethylacetamide.

The optical layer (dye layer) preferably has a thickness from 70 to 250 nm.

In a further aspect, the present invention provides for an optical layer suitable for a high-density recording medium, e.g. of the WORM disc format, in a laser wavelength range of from 500 to 700nm, preferably from 630 to 670 nm and most preferably around 650 nm.

The dye compounds of formulae (I) or (II) possess the required optical characteristics (such as high absortivity and high recording sensitivity), an excellent solubility in organic solvents, an excellent light stability and a decomposition temperature of 230-300°C.

### Preparation of the metallazo-triarylmethane dyes

The metallazo-triarylmethane dye compounds of formula (I) or (II) are obtained by condensing compound (A) with compound (B) in the ratio that is needed for equilibrating the charges.

For metallazo-triarylmethane dye compounds of formula (I), compound A is a triarylmethane salt, preferably a triarylmethane halide. Compound B is a 1:1 metal complex of a mono-azo salt, preferably a 1:1 metal complex of a mono-azo alkali salt.

For metallazo-triarylmethane dye compounds of formula (II), compound A is a triarylmethane salt, preferably a triarylmethane halide. Compound B is a 2:1 metal complex of a mono-azo salt, preferably a 2:1 metal complex of a mono-azo alkali salt.

The process for preparation can be described by the following steps
(a) an azo-coupling reaction to form a bivalent ligand,
(b) a chelating reaction with a metal salt,
(c) a cation exchange on the negatively charged azo salt with a cationic triarylmethane salt.

The solvents used in the process are selected from the group consisting of C₁₋₈ alcohols, glycols, glycol ethers, polyglycols, polyglycol ethers, esters, glycol esters, aromatics, dimethylformamide, N-methylpyrolidone or a mixture of one of these solvents with water or water itself.

Preferred solvents used in the process are ethanol, methanol, propanol, butanol, methoxypropanol and dipropyleneglycolmonomethylether.

Preferably, the complexes are prepared by reaction of a solution of metal-azo salt with a boiling solution of the corresponding chloro salt of the triarylmethane dye. The precipitate is isolated following standard methods.

### Preparation of high density optical disc recording medium

The preparation of a high density optical recording medium / high density optical disc conventionally comprises the following steps:
(a) providing a first substrate
(b) dissolving the dye in an organic solvent to form a solution,
(c) coating the first solution on the first substrate;
(d) drying the solution to form a dye layer and
(e) disposing a reflection layer on the dye layer and
(f) disposing a second substrate on the reflection layer

In step (f), preferably a second substrate is bonded with the first substrate to form the high-density optical disc recording medium. Conventional techniques for bonding are printing, glueing or melting.

### EXAMPLES

All metallazo-triarylmethane dye compounds were prepared using standard procedures known in the art, involving reaction of the appropriate metal-azo complex with the corresponding chloro salt of the triarylmethane dye in a 1:1 molar ratio in a mixture of water and ethanol.
The metallazo-triarylmethane dye compounds can be purified by recrystallization e.g. from an alcohol.

### Example 1

a) 13.0 parts of 3-oxa-1,2-diaza-cyclopenta[a]naphthalene-5-sulfonic acid are stirred into a mixture of 50 parts of water. The pH value of the yellow suspension is adjusted to 6.0 by the addition 6.7 parts of 30% sodium hydroxide. The resulting solution is then slowly poured into a solution of 6.8 parts of 3-diethylaminophenol in 75 parts of ethanol and 75 parts of water. By the simultaneous addition of 7.0 parts of sodium hydroxide, the pH is brought to 9.5. The resulting dark violet solution is stirred at room temperature for 2 hours before heating up to 40°C for one hour. 8.3 parts of 30% hydrochloric acid are added, the resulting violet precipitate build-up is recovered by filtration, washed salt free with deionized water and dried.
b) 2.5 parts of the monoazo dyestuffs of part a) above are suspended in 130 parts of water and 1.6 parts of sodium acetate. After warming to 98°C, 1.5 parts of nickel acetate in 35 parts of water are added for over one hour, whereupon a dark violet solution of the nickel complex results.
c) The dyestuff solution is cooled down to room temperature before being slowly reacted with a solution of 2.5 parts of {4-[bis-(4-dimethylamino-phenyl)-methylene]-cyclohexa-2,5-dienylidene) -dimethylammonium chloride (e.g. commercial product known as crystal violet) in 50 parts of ethanol. The resulting precipitate is stirred for one hour, filtered and the residue is washed salt free with deionized water and dried. A compound (4.0g) of the following formula (1) is obtained. 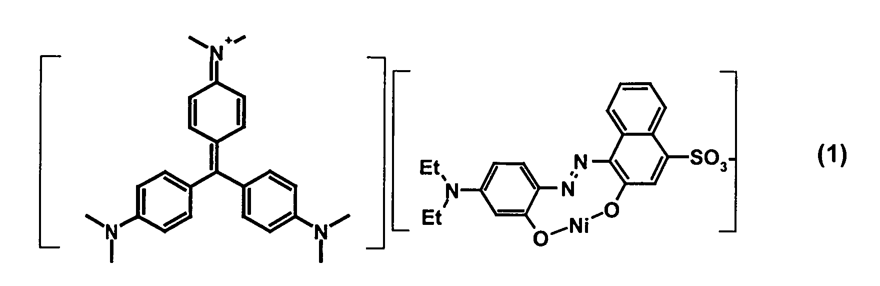
Yield: 92%; Decomp. point (DSC; sharp): 237°C; UV-Vis (EtOH) λₘₐₓ: 586 nm; ε (λₘₐₓ): 123000 l.mol⁻¹.cm⁻¹

### Example 2

The reaction steps a), b) and c) are carried out as described in Example 1 with the only difference, that Ni-acetate is replaced by Cu-acetate.
A compound (4.0g) of the following formula (2) is obtained. 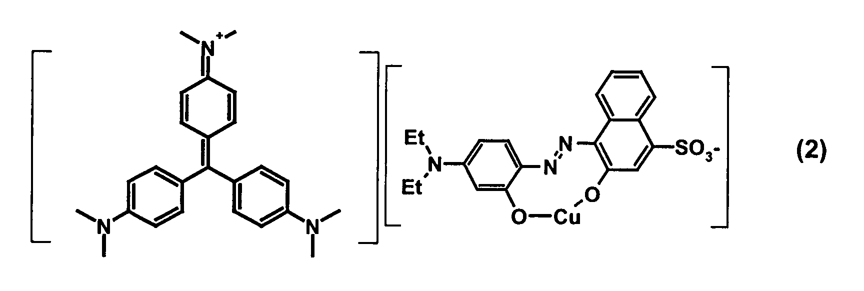 Yield: 92%; Decomp. point (DSC; sharp): 250°C; UV-Vis (EtOH) λₘₐₓ: 589 nm; ε (λₘₐₓ): 131500 l.mol⁻¹.cm⁻¹

### Optical and thermal properties

Optical and thermal properties of the new compounds based on triarylmethane and metalazo combinations were studied. The new dyes show high absorption at the desired wavelengths. In particular, the new dyes showed higher absorption at the desired wavelengthes than the metalazo component or the triarylmethane component alone.
In addition, the shape of the absorption spectra, that still remains critical to the disc reflectivity and formation of clean mark edges, are composed of two major bands wherein the second one, close to 600 nm, is higher.
More precisely, n values of the refractive index were evaluated between 2.4 and 2.6 and k values between 0.08 and 0.4. The refractive index of the dye layer was measured on a blank substrate with ETA-RT. Light stabilities were found comparable to the commercial dyes which usually are stabilised with quenchers for the use in optical data recording.
Sharp thresold of thermal decomposition in the required temperature range characterizes the new dyes, which is assumed to be desirable for the application in optical layers for optical data recording.
As a remark, the metal-azo complexes without triarylmethane as counter ions, usually do not decompose very sharply but melt in most cases.

### Example 3

0.30 g of the dye of formula (1) obtained from example 1 were dissolved in 10 ml of tetrafluoropropane, and stirred at room temperature for 5 hours. The solution was filtered with a Teflon filter (having 0,2 µm pore size) and spin coated over a substrate to form a dye layer. The substrate was a polycarbonate substrate with 0.6 mm thickness having pregrooves with 170 nm depth, 330 nm width and 800 nm track pitch.

The substrate having the dye layer was dried in a vacuum oven set at 40°C for 12 hours. The optical layers obtained had a uniform and even surface at a thickness of 90 nm.
As a reflective layer, silver was deposited over the dye layer with a thickness of 100 nm. An acrylic UV curable resin was spin-coated over the reflective layer and then cured by radiation of UV rays to form a protective layer.
Finally, the substrate with the reflective layer and the recording layer was combined with another blank substrate with a thickness of 0.6 mm. The final product is a high-density recordable optical disc of about 120 mm diameter.

To evaluate the final product a PULSTEC DDU-1000 evaluation test machine was used to write and read the test results.

The recording conditions were: constant linear velocity (CLV) at 3.5 m/s, wavelength at 658 nm, numerical aperture (NA) at 0.6, and writing power from 7-14 mW.The reading conditions were: CLV at 2.5 m/s, wavelength at 658nm, NA at 0.6, and reading power from 0.5 to 1.5 mW.

The tests provided for results within the expectations with regard to absorptivity, reflectance and recording sensitivity. Further, the obtained optical layers were sufficiently stable to light and heat. The optical recording media were storage stable within specifications.

### Example 4

Optical recording media with an optical layer comprising the dyes obtained according to example 2 were manufactured and tested,according to the procedure given for example 3.

As the results of examples 3 and 4 clearly indicate, the compounds of examples 1 and 2 are suitable for the use in optical layers for optical data recording media with good results.

## Claims

1. A dye compound comprising cationic triarylmethane derivatives and anionic 2:1 and 1:1 mono-azo metal complexes of the formulae (I) or (II) 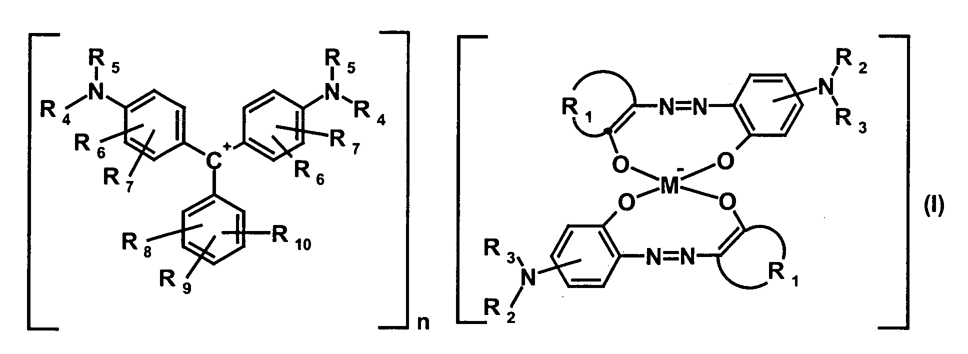 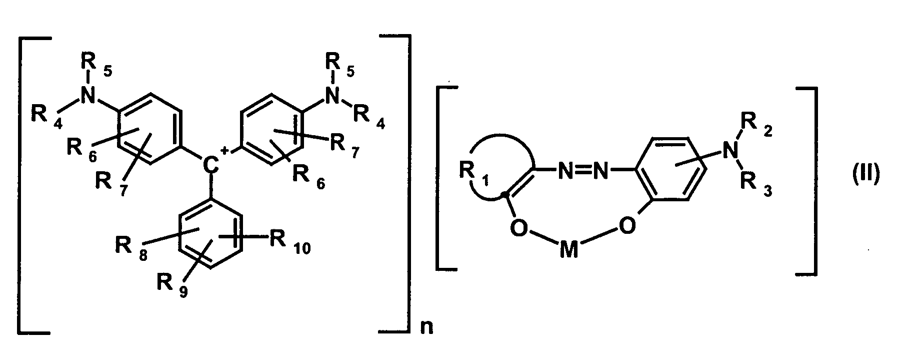 wherein
n is 1 to 4 and corresponds to the total number of anionic groups (M⁻, CO₂⁻ and SO₃⁻) located on the mono-azo metal complexe moiety of the molecule,;
M represents a metal atom,
each R₁ independently, together with the -C=C- group to which they are attached, form a single or fused aromatic ring system that is substituted with at least one or more sulfonate (SO₃⁻) or carboxylate (CO₂⁻) groups;
R₂ and R₃ independently of each other, represent hydrogen, alkyl, alkoxyalkyl, cycloalkyl, dialkylamino-alkyl, aryl, heteroaryl or R₂, R₃ together with the N atom to which they are bonded, form a heterocyclic 5, 6 or 7-membered ring, optionally with participation of further hetero atoms selected from the group consisting of O, N, S;
R₄ and R₅ independently of each other, represent hydrogen, alkyl, alkoxyalkyl, cycloalkyl, aryl, dialkylamino-alkyl, aryl, arylsulfonyl, alkylarylosulfonyl, heteroaryl, alkoxy, alkylthio, aryloxy, arylthio.
R₆, R₇, R₈, R₉, R₁₀ independently of each other, represent hydrogen, hydroxy, halogen (F, Cl, Br, I), cyano, nitro, alkyl, aryl, amino, alkylamino, dialkylamino, arylamino, diarylamino, dialkylamino-alkyl, heteroaryl, alkoxy, alkylthio, aryloxy, arylthio, SO₃H, SO₂NR₁₁R₁₂, CO₂R₁₂, CONR₁₁R₁₂, NHCOR₁₂, wherein
R₁₁ is hydrogen, C₁₋₆alkyl, C₆₋₁₀aryl, C₁₋₆alkoxy and
R₁₂ is hydrogen, C₁₋₆alkyl, C₆₋₁₀aryl, C₁₋₆alkoxy.

2. A dye compound according to claim 1, wherein
n is 1, 2, 3 or 4 and corresponds to the total number of anionic groups (M⁻, CO₂⁻ and SO₃⁻) located on the mono-azo metal complexe moiety of the molecule;
M is selected from the group consisting of Mg, Mn, Co, Cr, Fe, Ni, Cu, Zn, Al;
each R, independently, together with the -C=C- group to which they are attached, form a benzene or naphtalene aromatic ring that is substituted with at least one or more sulfonate (SO₃⁻) or carboxylate (CO₂⁻) groups;
R₂ and R₃ independently of each other, represent hydrogen, C₁₋₄alkyl, C₁₋₄ alkoxyalkyl, C₅₋₆cycloalkyl, C₆₋₁₀aryl, or
R₂ and R₃ together with the N atom to which they are bonded, form a heterocyclic ring selected from the group consisting of pyrolidino, piperidino or morpholino;
R₄ and R₅ independently of each other, represent hydrogen, C₁₋₄alkyl, C₁₋₄alkoxyalkyl, C₅₋₆cycloalkyl or C₆₋₁₀aryl;
R₆, R₇, R₈, R₉ independently of each other, represent hydrogen, hydroxy, halogen (F, Cl, Br, I), cyano (CN), nitro (NO₂), C₁₋₄alkyl, C₁₋₄alkoxyalkyl, C₅₋₆cycloalkyl or C₆₋₁₀aryl; amino, C₁₋₄alkyl amino, C₁₋₄ dialkylamino, C₆₋₁₀aryl amino, C₆₋₁₀diarylamino, C₁₋₄alkoxy, C₁₋₄alkylthio, C₆₋₁₀aryloxy, C₆₋₁₀arylthio, SO₃H, SO₂NR₁₁R₁₂, CO₂R₁₂, CONR₁₁R₁₂, NHCOR₁₂, wherein
R₁₁ is hydrogen, C₁₋₆alkyl, C₆₋₁₀aryl, C₁₋₆alkoxy and
R₁₂ is hydrogen, C₁₋₆alkyl, C₆₋₁₀aryl, C₁₋₆alkoxy;
R₁₀ C₁₋₄ dialkylamino.

3. A dye compound according to claims 1 or 2, wherein
n is 1 or 2 and corresponds to the total number of anionic groups (M⁻, CO₂⁻ and SO₃⁻) located on the mono-azo metal complexe moiety of the molecule;
M is selected from the group consisting of Fe, Ni, Cu, Al;
each R₁ independently, together with the -C=C- group to which they are attached, form a benzene or naphtalene aromatic ring that is substituted with one sulfonate (SO₃⁻);
R₂ and R₃ independently of each other, represent hydrogen, C₁₋₄alkyl, or R₂ and R₃ together with the N atom to which they are bonded, form a heterocyclic ring selected from the group consisting of pyrolidino, piperidino or morpholino;
and the amino group bearing R₂ and R₃ is in the 4- or 5- position of the phenyl ring.
R₄ and R₅ independently of each other, represent hydrogen or C₁₋₄alkyl;
R₆, R₇, R₈, R₉ represent hydrogen;
R₁₀ is C₁₋₄ dialkylamino in the 4-position of the phenyl ring.

4. A dye compound according to claims 1, 2 or 3, wherein
n is 1 or 2 and corresponds to the total number of anionic groups (M⁻, CO₂⁻ and SO₃⁻) located on the mono-azo metal complexe moiety of the molecule;
M is selected from the group consisting of Ni or Cu;
each R₁ independently, together with the -C=C- group to which they are attached, form a naphtalene aromatic ring that is substituted with one sulfonate (SO₃⁻);
R₂ and R₃ independently of each other, represent C₁₋₄alkyl, and the amino group bearing R₂ and R₃ is in the 4- position of the phenyl ring;
R₄ and R₅ independently of each other, represent C₁₋₄alkyl;
R₆, R₇, R₈, R₉ represent hydrogen;
R₁₀ is dimethylamino in the 4-position of the phenyl ring.

5. An optical layer comprising a dye compound of the formula (I) or (II) according to claims 1 to 4.

6. A method for producing optical layers according to claim 5, comprising the following steps
(a) providing a substrate,
(b) dissolving a dye compound of the formula (I) or (II) according to claims 1 to 4 in an organic solvent to form a solution,
(c) coating the solution (b) on the substrate (a);
(d) evaporating the solvent to form a dye layer.

7. A method according to claim 6, wherein the substrate is polycarbonate (PC) or polymethylmethacrylate (PMMA).

8. A method according to claim 6, wherein the organic solvent is selected from C₁₋₈ alcohols, halogen substituted C₁₋₈ alcohols, C₁₋₈ ketones, C₁₋₈ ether, halogen substituted C₁₋₄ alkanes, or amides.

9. A method according to claim 6, wherein
the C₁₋₈ alcohols or halogen substituted C₁₋₈ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the C₁₋₈ ketones are selected from acetone, methylisobutylketone, methylethylketone, or 3-hydroxy-3-methyl-2-butanone;
the halogen substituted C₁₋₄ alkanes are selected from chloroform, dichloromethane or 1-chlorobutane; and the amides are selected from dimethylformamide or dimethylacetamide.

10. A method according to claim 6, wherein the optical layer (dye layer) has a thickness from 70 to 250 nm.

11. An optical recording medium comprising an optical layer, wherein at least one dye compound of the formula (I) or (II) according to claims 1 to 4 is used.

12. A method for producing an optical recording medium according to claims 10, comprising the following steps
(a) providing a first substrate
(b) dissolving a dye compound of the formula (I) or (II) according to claims 1 to 4 in an organic solvent to form a solution,
(c) coating the solution (b) on the first substrate (a),
(d) evaporating the solvent to form a dye layer,
(e) disposing a reflection layer on the dye layer and
(f) disposing a second substrate on the reflection layer.
